# EUROPEAN PATENT SPECIFICATION

(11) **EP 2 108 676 B1**
(45) Date of publication and mention of the grant of the patent: **27.12.2017**
(21) Application number: 08154011.4
(22) Date of filing: 03.04.2008
(51) Int. Cl.: C08B 15/10, C08B 37/00, C08L 1/02, D21C 9/00, D21H 11/20

(54) **CROSSLINKED PAPER BASED MATERIAL**
VERNETZTES PAPIERMATERIAL
MATÉRIAU RÉTICULÉ À BASE DE PAPIER

(43) Date of publication of application: 14.10.2009
(73) Proprietor: OrganoClick AB, 187 66 TÄBY (SE)
(72) Inventor: Cordova, Armando, 116 42, STOCKHOLM (SE); Hafrén, Jonas Fredrik, 113 54, STOCKHOLM (SE); Vesely, Jan, 25101 Ricany (CZ); Zhao, Gui-Ling, 113 46, STOCKHOLM (SE); Enquist, Karl, 183 31, TÄBY (SE); Hellberg, Mårten, 114 37, STOCKHOLM (SE)
(74) Representative: Bergenstråhle Group AB

(56) References cited:
- EP-A- 0 614 914
- EP-A- 1 043 391
- WO-A-01/87365
- WO-A-95/11925
- WO-A-2004/055267
- WO-A-2006/079512
- WO-A-2007/038964
- GB-A- 803 670
- GB-A- 1 111 273

## Description

### TECHNICAL FIELD

The present invention relates to a cross-linking composition to be used for cross-linking heterogeneous polysaccharides, cross-linked heterogeneous polysaccharides and a method of cross-linking heterogeneous polysaccharides.

### BACKGROUND ART

Crosslinked cellulose fibers and methods for their preparation are widely known. Tersoro and Willard, Cellulose and Cellulose Derivatives, Bikales and Segal, eds., Part V, Wiley-Interscience, New York, (1971), pp. 835-875. The term "cross-linked cellulose fiber" generally refers to a cellulose fiber having intrafiber crosslinks, i.e., crosslinks between individual cellulose chains within a single cellulose fiber. Moreover, interfiber crosslinking i.e., crosslinks between individual cellulose fibers can occur. Crosslinking agents are generally bifunctional compounds, and in the context of intra-fiber cellulose crosslinking, these agents covalently couple a hydroxy group of one cellulose chain to another hydroxy group of a neighboring cellulose chain within the same fiber to obtain a higher degree of stiffness in the fiber. These intra-fiber crosslinked cellulosic fibers are currently commercial available (sold by the Weyerhaeuser company) for use in e.g. fluff cellulose used in personal hygiene products. Several crosslinking agents have been utilized in cellulose crosslinking achieving varying degree of success.

Common cellulose crosslinking agents include aldehyde and urea-based formaldehyde addition products (for selected examples see: U.S. Pat. Nos. 3,224,926; 3,224, 926; 3,241,533; 3,932,209; 4,035,147; and 3,756,913). While these crosslinking agents have been widely used in some environments (e.g. for durable press-finishing for textiles), the applicability has been limited by safety concerns. These crosslinkers are known to cause irritation to human skin. Furthermore, formaldehyde, which persists in formaldehyde-crosslinked products, is a known health hazard and has been listed as a carcinogen by the EPA. Thus, there is an urgent need for the development of safer alternatives.

Other aldehyde crosslinking agents are also known. For example, dialdehyde crosslinking agents (i.e., C2-C8 dialdehydes and preferably glutaraldehyde) have also been utilized in the production of absorbent structures containing crosslinked cellulose fibers. See, for example, U.S. Pat. Nos. 4,689,118 and 4,822,453. While these dialdehyde crosslinkers appear to overcome the health risks associated with formaldehyde crosslinkers, these crosslinking agents suffer from commercial disadvantages related to the costs of producing dialdehyde crosslinked fibers.

Cellulose has also been crosslinked by polycarboxylic acid crosslinking agents. Certain polycarboxylic acids have been used to provide absorbent structures that have the polycarboxylic acid reacted with fibers in the form of intrafiber crosslink bonds. For example, U.S. Pat. Nos. 5,137,537;5,183,707; and 5,190,563 describe the use of C2-C9 polycarboxylic acids crosslinking agents. These C2-C9 polycarboxylic acids are low molecular weight polycarboxylic acids that contain at least three carboxyl groups, and have from two to nine carbons in the chain or ring separating two of the carboxyl groups. Examples of C2-C9 polycarboxylic acids include 1,2,3-tricarboxypropane, 1,2,3,4-tetracarboxybutane, and oxydisuccinic acid. In particular, a preferred C2-C9 polycarboxylic acid is citric acid. Unlike the aldehyde-based crosslinking agents noted above, these polycarboxylic acids are nontoxic and form more stable ester bonds. However, these cross-linking agents are narrow in their temperature interval to achieve covalent ester bonds with the hydroxyl groups of the cellulose. Moreover, they are not flexible in the production of crosslinked fibers having specific, desirable properties. Thus, there is a need for a safe and economical crosslinking agent, which achieves covalent ester bonds over a wide temperature range to provide crosslinked fibers having a correspondingly wide range of crosslinking and associate advantageous properties. Moreover, cellulosic fibers crosslinked with low molecular weight polycarboxylic acids such as citric acid, tend to lose their crosslinks over time and revert to uncrosslinked fibers. For example, citric acid crosslinked fibers show a considerable loss of crosslinking on storage, which significantly defeats the purpose of the fiber crosslinking, which is to increase the fiber's bulk and capacity. Thus, the useful shelf-life of fibers crosslinked with these polycarboxylic acids is relatively short and renders the fibers somewhat limited in their utility.

Polymers as intrafiber crosslinking agents are also known. For example, U.S. Pat. Nos. 5,998, 511; 5,549,791; and 6,582,553. In this case, polymeric polycarboxylic acid crosslinking agents such as poly-acrylic acid and polymaleic acid polymers have been used for the intrafiber crosslinking of cellulose. Suitable crosslinking catalysts for these processes can include acidic inorganic salts, such as ammonium chloride, ammonium sulphate, aluminum chloride, magnesium chloride, magnesium nitrate, and alkali metal salts of phosphorous-containing acids. In one embodiment, the crosslinking catalyst is sodium hypophosphite.

The use of organic acids as catalysts for the modification of cellulose with acids containing mono and di- acid functionalities is known. For example see, International Patent WO 2006068611. However, this methodology has not been applied for the intrafiber cross-linking of heterogeneous cellulose with polymeric polycarboxylic acids.

As there have been much attention paid to methods for intra-fiber crosslinking of cellulosic fibers and the products derived therefrom, however little attention has been paid to environmentally benign methods for inter-fiber crosslinking of cellulosic fibers. Cellulosic products derived from intra-fiber crosslinked cellulosic fibres have an enhanced stiffness within the fibre desirable for a number of products. However, for obtaining cellulosic materials such as paper, paperboard, and textiles with an enhanced strength, stiffness, and stretch inter-fiber crosslinking of the cellulosic fibers by covalent bonds would be desirable. In particular, the so-called wet strength is enhanced by inter-fiber cross-links. Commonly used paper wet-strength agents today are cationic starches, copolymers of acryl amide, and polyamides creating webs around the cellulosic web or increasing the amount of hydrogen bonds holding the cellulosic web together, however not creating inter-fiber crosslinks between the fibers. However, methods for creating inter-fiber methods for enhanced paper wet strength using poly-(vinyl alcohol) as the crosslinking agent has been disclosed (see Gordon et. al, 2003). Also systems for creating inter-fiber bonds between the cellulose fibers using carboxylic acid cyclic anhydrides derived from small dicarboxylic organic acids as the cross-linking agent have been developed (US Patent 5,958,180). However, the method utilizes relatively expensive cross-linking agents, and the fibers treated need to be in a relatively dry state, thereby limiting the usefulness of the method. In addition, the small dicarboxylic acids utilized have a limited reach and functionality and can thereby only crosslink two fibers with each other. GB766532 disclose printing plates coated with a dried water insoluble film prepared from a carboxymethyl ether of cellulose and an acid insolubilizing agent. However, no printing paper material is disclosed to undergo such a treatment in order to improve mechanical properties.

Further examples of prior art are found in the following patent publications;
WO2004/055267 A1
EP0440472 A1
GB821375
WO01/87365 A2
WO95/11925 A1
WO2006/079512 A1
WO2007/038964A1
EP1043391 A1/US6303560
GB1111273
EP0614914 A2
SU49930 A1
EP1860121 A2

The general object of the present invention is to provide an effective method for obtaining structures with increased levels of strength, stiffness and strain. The object of the current invention is to overcome these difficulties mentioned above and to provide chemical formulations and methods for environmentally friendly inter-fiber crosslinking of cellulose fibers thus obtaining cellulose materials with enhanced mechanical properties.

### SUMMARY OF THE INVENTION

The present invention relates to a method of crosslinking a paper based material selected from printing paper, gypsum grade paper, kraft sack paper, paperboard, liquid packaging board, corrugated board, fine paper, thin paper, and specialty paper. The method comprises the steps of a) preparing an aqueous crosslinking solution consisting of a crosslinking polysaccharide containing at least two carboxylic acid functionalities selected from pectines, carboxymethyl starch, carboxymethyl cellulose and mixtures thereof; and an organic acid crosslinking catalyst selected from formic acid, acetic acid, propionic acid, butanoic acid, and pentanoic acid, mandelic acid, amino acid, maleic acid, tartaric acid, citric acid and mixtures thereof in the amount of 0.1-100 weight parts, calculated on 100 weight parts of said crosslinking polysaccharide; b) adding said aqueous crosslinking solution by coating, spraying on said paper based material, or by dipping said paper based material in said aqueous crosslinking solution; and c) adding said aqueous crosslinking solution by coating, spraying on said paper based material, or by dipping said paper based material in said aqueous crosslinking solution. According to the invented method, the paper based material is made from unbleached wood pulp, bleached wood pulp, unbleached pulp or recycled pulp. According to the invented method, the polysaccharide containing at least two carboxylic acid functionalities can be carboxymethyl starch. In another aspect of the invented method, the polysaccharide containing at least two carboxylic acid functionalities is carboxymethyl cellulose. According to one aspect of the method, the organic acid is citric acid. According to one aspect of the method, the organic acid is tartaric acid. The present invention further relates the use of an aqueous crosslinking solution to improve the strength of a paper based material selected from printing paper, gypsum grade paper, Kraft sack paper, paperboard, liquid packaging board, corrugated board, fine paper, thin paper, and specialty paper, wherein the crosslinking solution consisting of a crosslinking polysaccharide containing at least two carboxylic acid functionalities selected from pectines, carboxymethyl starch, carboxymethyl cellulose and mixtures thereof; and an organic acid crosslinking catalyst selected from formic acid, acetic acid, propionic acid, butanoic acid, and pentanoic acid, mandelic acid, amino acid, maleic acid, tartaric acid, citric acid and mixtures thereof in the amount of 0.1-100 weight parts, calculated on 100 weight parts of said polysaccharide is sprayed on said paper based material, whereafter the water is removed by heating at a temperature ranging from 50-200 C for in between 1 minute to 8 hours.

### BRIEF DESCRIPTION OF THE DRAWINGS

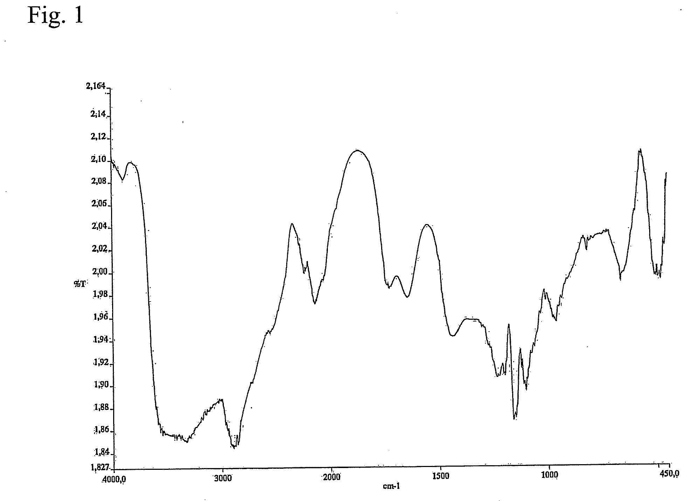

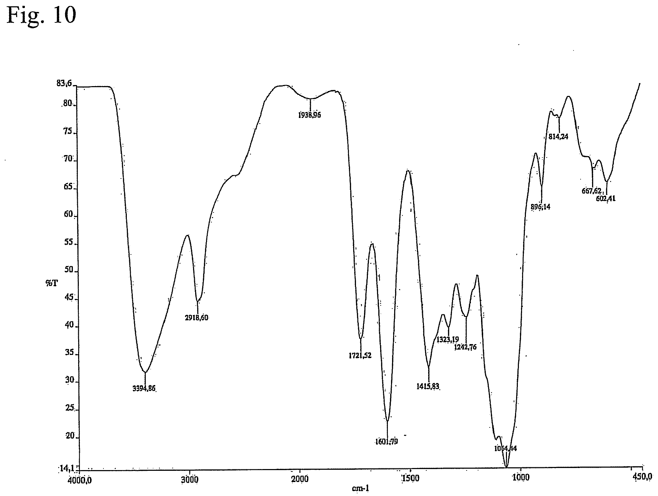

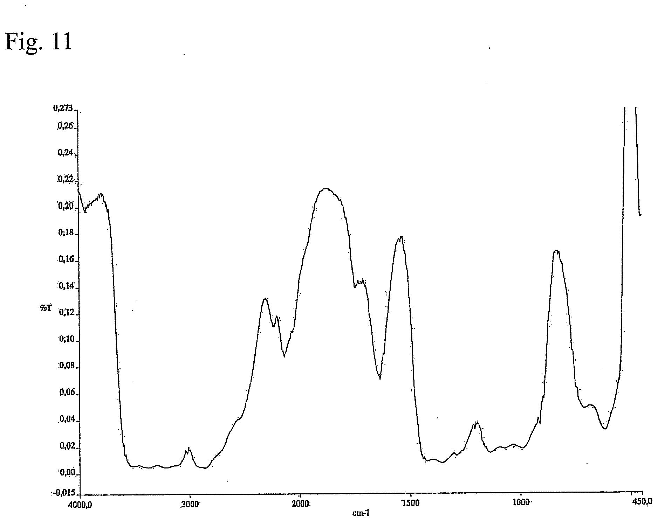

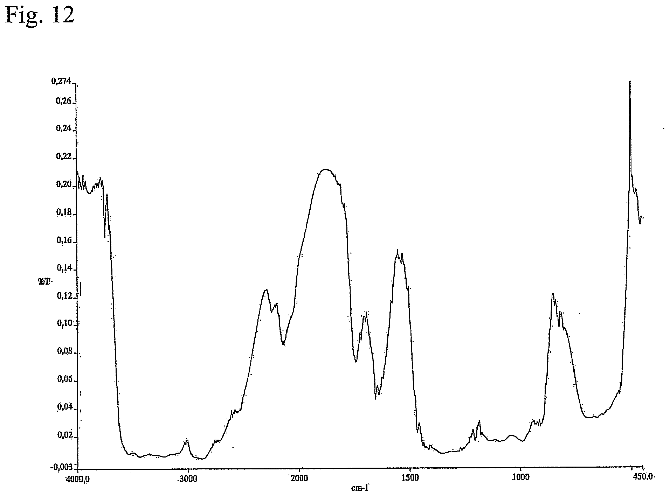

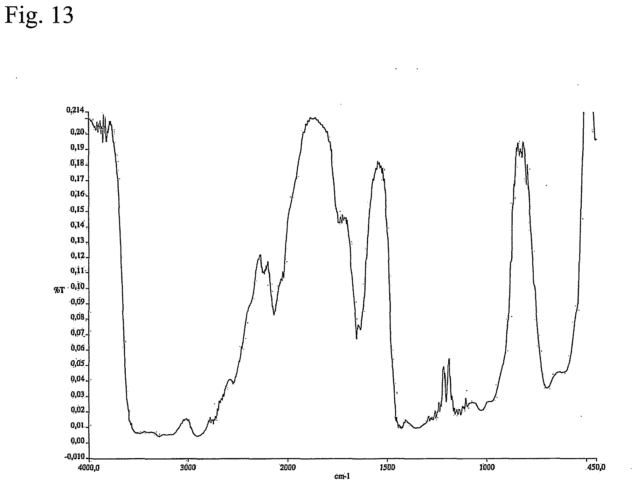

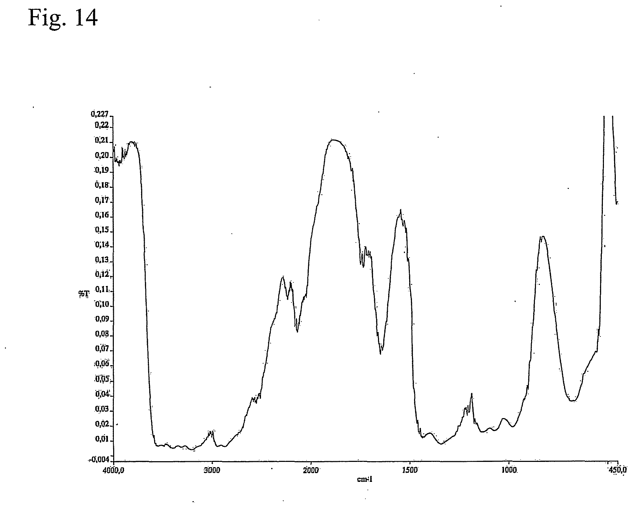

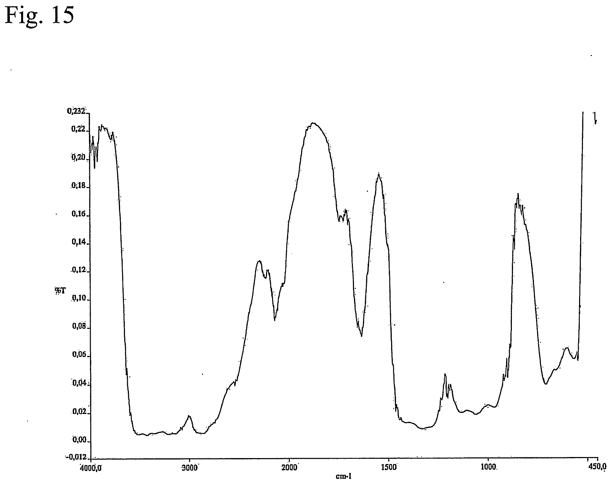

Figure 1-10 shows FT IR spectrums from the examples, showing the presence of ester bonds according to the present invention.

### DEFINITIONS

By "heterogeneous" is meant not dissolved. Heterogeneous cellulose is thus cellulose that is not dissolved.

Heterogeneous polysaccharides are thus polysaccharides that are not dissolved.

Cross-linking polysaccharides is a process where a hydroxy group of one monosaccharide unit of the polysaccharide is covalently linked to another hydroxy group of a neighboring monosaccharide unit either within the polysaccharide chain or to another chain.

### DETAILED DESCRIPTION

Generally described and exemplified herein are cross-linking compositions to be used for cross-linking heterogenous polysaccharides, the composition comprising a cross-linking agent selected from a group of cross-linking polysaccharides containing at least two carboxylic acid functionalities in its backbone and/or side chains, wherein the cross-linking polysaccharides are different from the heterogeneous polysaccharides, and the composition further comprises a cross-linking catalyst selected from the group consisting of organic acids, amino acids, acidic inorganic salts and mixtures thereof, in the amount of 0.1-100 weight parts calculated on 100 parts of the cross-linking polysaccharide.

As disclosed above, heterogeneous polysaccharides are polysaccharides which are not dissolved. This is contrary to polysaccharides for example dissolved in LiCl/dimethylacetamide (DMAC) or N-methyl morpholine oxide (NMO).

The compositions are used for cross-linking heterogeneous polysaccharides. By this composition, comprising a cross-linking agent selected from a group of cross-linking polysaccharides containing at least two carboxylic acid functionalities in its backbone and/or side chains, an environment friendly cross-linking agent has been found, compared to earlier used cross-linking agent. The compositions are also relative less cheap compared to some earlier used cross-linking agents, such as dialdehyde cross-linking agents. The cellulose fibres cross-linked with the cross-linking polysaccharides will further obtain properties as improved strength, stiffness and stretch, which is not obtained by the polysaccharides which are only intra cross-linked. In addition, all materials are from renewable resources and thus the materials can be recycled.

The cross-linking agent may be selected from the group consisting of pectines, polysaccharides with a polygalacturonic acid backbone, carboxymethyl starch, carboxymethyl cellulose and mixtures thereof. It has unexpectedly been found that these polysaccharides work for cross-linking heterogeneous polysaccharides. These cross-linking agents are natural products and they are environment friendly.

The cross-linking catalyst may be selected from mono-, poly-carboxylic acids or organic sulphonic acids. These catalysts are non-toxic and FDA approved. They do not contain any metals and are biodegreadable. The acids will act as Bronsted acids (Bronsted catalysis) and thereby enhance the rate of esterification.

Further, the cross-linking catalyst may be selected from the group consisting of formic acid, acetic acid, propionic acid, butanoic acid, and pentanoic acid, mandelic acid, amino acid, maleic acid, tartaric acid, citric acid and mixtures thereof. These acids have the advantage of being organic molecules and thus do not contain any metals and are biodegradable. Several of them are also non-toxic and FDA approved. These acids will act as Bronsted acids (Bronsted catalysis) and thereby enhance the rate of esterification.

Generally described herein are cross-linked heterogeneous polysaccharides, which have been cross-linked by a cross-linking agent selected from a group of cross-linking polysaccharides containing at least two carboxylic acid functionalities in its backbone and/or side chains and optionally a cross-linking catalyst. The cross-linked heterogeneous polysaccharides thus have a cross-linking bridge of polysaccharides containing at least two carboxylic acid functionalities in its backbone and/or side chains. The so cross-linked heterogeneous polysaccharides have several good properties, such as high strength, high stiffness and good stretch properties. The wet-strength can also be improved.

The cross-linked heterogeneous polysaccharides comprise at least one inter-fibre cross-linking bridge between polysaccharide fibres. As disclosed above, the effect of using the cross-linking polysaccharides according to above, an interfibre bonding is obtained, which give very good properties as high strength, high stiffness and good stretch properties. The interfibre esterification is achieved by that the crosslinking polysaccharide is forming a hydrogen bonded network across the different fibers of the heterogeneous polysaccharide derivative and next the covalent esterification occurs throughout the interfibre network.

The heterogeneous polysaccharides are in the form of fibres. Further, the heterogeneous polysaccharides are chosen from the group consisting of fibres of cellulose, hemicellulose or lignocellulose. It has been found that these polysaccharides are improved in a very high degree when cross-linked with the cross-linking polysaccharides according to the present invention. Further, the heterogeneous cellulose is a paper base material (e.g. printing paper, gypsum grade paper, kraft sack paper, paperboard, liquid packaging board, corrugated board, fine paper, thin paper, and specialty paper. The paper based material can be made from unbleached wood pulp, bleached wood pulp, unbleached pulp, recycled pulp. The heterogeneous cellulose may also be a cellulose based textile such as cotton, linen, hemp or viscose. Further, the cellulose may be a wood or a wood product such as timbre.

Further, the different kind of cross-linking agents disclosed for the compositions above may be used for cross-linking the heterogeneous polysaccharides.

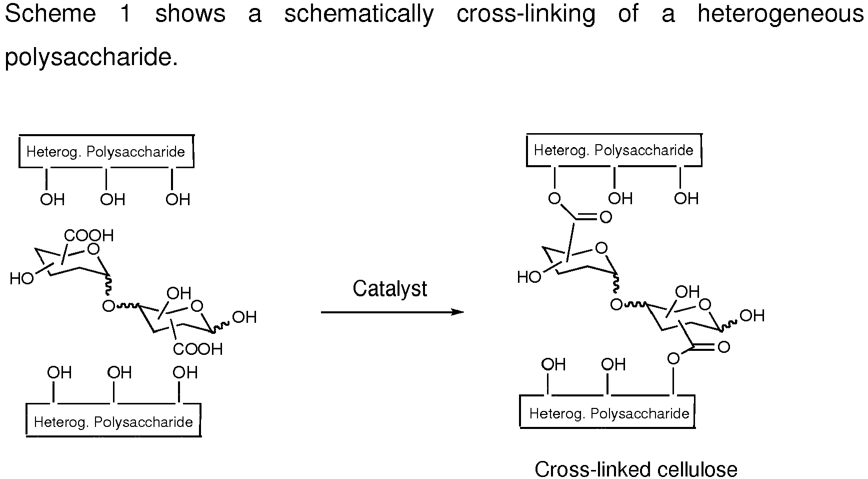

. Any of the catalysts may be used. The general formula of the heterogeneous cross-linked polysaccharide encompasses any polysaccharide with the general formula as described in Scheme 1.

A method of cross-linking heterogeneous polysaccharides is generally described, comprising applying a solution comprising a cross-linking polysaccharide containing at least two carboxylic acid functionalities in its backbone and/or side chains and optionally a catalyst in the amount of 0.1-100 weight parts, calculated on 100 weight parts of the cross-linking polysaccharide, to the heterogeneous polysaccharides and thereafter heating the heterogeneous polysaccharides. It has now surprisingly been found that a cross-linking of heterogeneous polysaccharides may be achieved by using a cross-linking polysaccharide containing at least two carboxylic acid functionalities. A stronger and more flexible polysaccharide will be achieved compared to polysaccharides cross-linked according to prior art methods.

The reaction can be seen in Scheme 1 above. In addition, to the covalent cross-linking the crosslinking polysaccharide will form a strong hydrogen bond network with the hydroxy groups of the heterogeneous polysaccharide substrate. This very strong interaction will synergistically contribute as an additional force to the covalent cross-linking in a way that has never been done before and significantly improve the strength as well as flexibility of the material.

Further, the method comprises the steps of to
a) prepare an aqueous cross-linking solution comprising the cross-linking polysaccharides, and optionally a catalyst in the amount of 0.1-100 weight parts calculated on 100 weight parts of the cross-linking polysaccharide,
b) add the solution to the heterogeneous polysaccharides by:
   i) dipping the heterogeneous polysaccharide in the cross-linking solution, or
   ii) applying the cross-linking solution to the heterogeneous polysaccharides by a coating process, or
   iii) applying the cross-linking solution to heterogeneous polysaccharides by spraying the cross-linking solution on the heterogeneous polysaccharides, or
   iv) mixing the heterogeneous polysaccharides with the cross-linking solution,
c) remove the water from the heterogeneous polysaccharides by heating at a temperature ranging from 50-200°C in between 1 minutes to 8 hours.

The solution used above for preparing the aqueous solution under a) may be a solution commonly used in the manufacturing of paper and paperboard materials.

The method will be easier by the use of the new cross-linking agent. The temperature interval is not so narrow, which might be the case in some prior art techniques.

The heterogeneous polysaccharides in the method may be chosen from the group of cellulose, hemicellulose or lignocellulose, which as mentioned earlier, are very useful in the method and will achieve very good results in the final product.

The heterogeneous polysaccharides may be cellulose, wherein the cellulose is wood or a wood product, or wherein the cellulose is a paper based material, which is made from unbleached wood pulp, bleached wood pulp, from unbleached pulp or from recycled pulp, or the cellulose is a cellulose based textile such as cotton, linen, hemp, or viscose, or is made from cotton.

The cross-linking agent may be selected from the group consisting of pectines, polysaccharides with a polygalacturonic acid backbone, carboxymethyl starch, carboxymethyl cellulose and mixtures thereof as disclosed above for the cross-linked heterogeneous polysaccharides.

The cross-linking catalyst used in the method may be selected from mono-, poly-carboxylic acids or organic sulphonic acids. Further, the cross-linking catalyst may be selected from the group consisting of formic acid, acetic acid, propionic acid, butanoic acid, and pentanoic acid, mandelic acid, amino acid, maleic acid, tartaric acid, citric acid and mixtures thereof. Additionally, the cross-linking agent may be selected from the group consisting of ammonium chloride, ammonium sulphate, aluminium chloride, magnesium chloride, magnesium nitrate, alkali metal salts of phosphorous-containing acids, such as sodium hypophosphite, and mixtures thereof.

The method results in a quite high level of inter-fibre cross-linking. This results in very good strength and stiffness of the produced cross-linked polysaccharides. The inter-fibre cross-linking is made by esterification of the hydroxyl groups of the heterogeneous polysaccharides. The cross-linking is both inter-fibre cross-linking and intra-fibre cross-linking.

The cross-linking may be performed without a cross-linking catalyst. The cross-linking is then performed by auto-catalysis. Thus, in this case the acid groups of the cross-linking polysaccharide will act as the Bronsted acid and thereby accelerate the esterification reaction (Bronsted catalysis).

The following Examples described illustrate methods and uses according to the present invention. To the extent that the following Examples do not contain materials, methods and uses included in the appended claims, they should be regarded as comparative and serve as reference technology.

### EXAMPLES

### Example 1: Organic Acid Catalyzed Crosslinking of Heterogeneous Cellulose.

An aqueous solution of cross-linking polysaccharides with polymeric carboxylic acid units (0.25-20%) such as pectin, carboxymethyl starch or carboxymethyl cellulose and organic acid catalyst (1-5 mol%) was prepared. Next, heterogeneous cellulose (50g-1 Kg) (e.g. pulp, filter paper, mechanical pulp, kraft pulp and cotton) was added to this aqueous solution. The cellulose soaked with the solution was thereafter removed from the solution and heated (50-150 ºC) for the time (10 min- 3h) needed to achieve esterification and crosslinking. The crosslinked cellulose was next washed with water and analyzed by FT IR, which confirmed the presence of ester bonds. Moreover, selected prepared sheets were measured for their levels of strength, stiffness and strain.

### Ex 1a) Organic Acid Catalyzed Heterogeneous Crosslinking of paper (according to the method in Example 1)

An aqueous solution of cross-linking carboxymethyl cellulose (1 wt-%) and citric acid catalyst (1 wt-%) was prepared. Next, filter paper (0.5 g) was added to this aqueous solution. The heterogeneous cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 1).

### Ex 1b) Organic Acid Catalyzed Heterogeneous Crosslinking of paper (according to the method in Example 1)

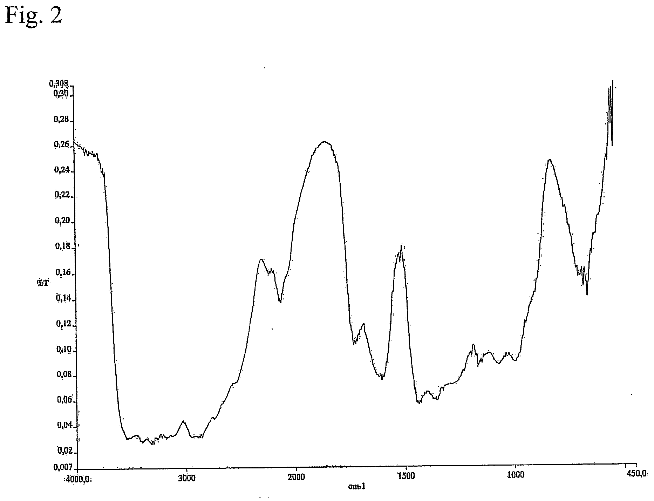

An aqueous solution of cross-linking carboxymethyl cellulose (5 wt-%) and citric acid catalyst (1 wt-%) was prepared. Next, heterogeneous filter paper (0.5 g) was added to this aqueous solution. The cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 2).

### Ex 1c) Organic Acid Catalyzed Heterogeneous Crosslinking of Paper (according to the method in Example 1)

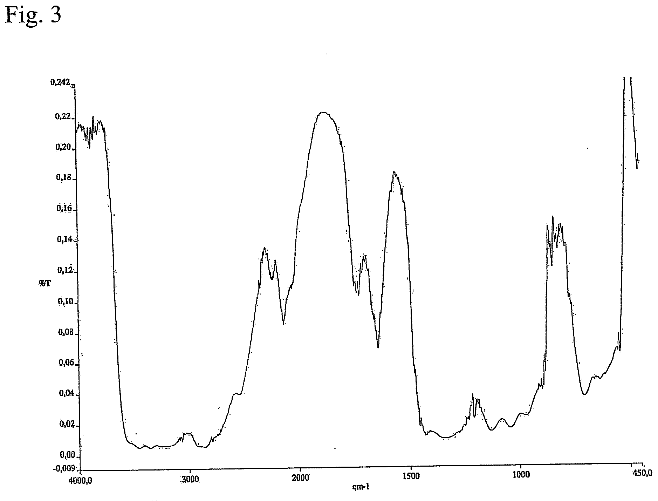

An aqueous solution of cross-linking pectin (1 wt-%) and citric acid catalyst (1 wt-%) was prepared. Next, heterogeneous filter paper (0.5 g) was added to this aqueous solution. The cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 3).

### Ex 1d) Organic Acid Catalyzed Heterogeneous Crosslinking of Paper (according to the method in Example 1)

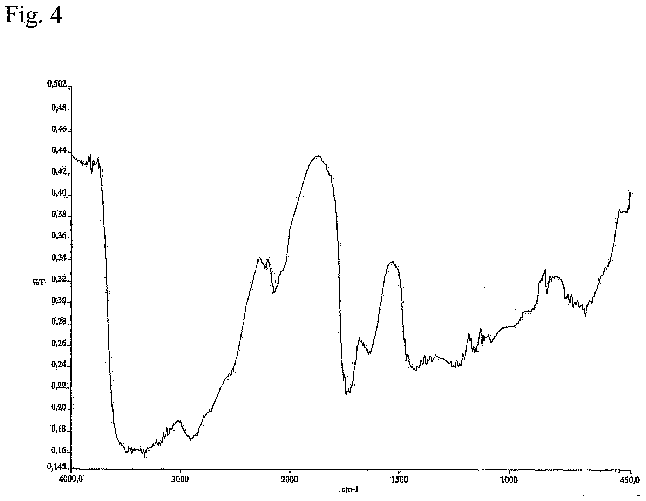

An aqueous solution of cross-linking pectin (5 wt-%) and citric acid catalyst (1 wt-%) was prepared. Next, heterogeneous filter paper (0.5 g) was added to this aqueous solution. The cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 4).

### Ex 1e) Organic Acid Catalyzed Heterogeneous Crosslinking of Cellulose Paper (according to the method in Example 1)

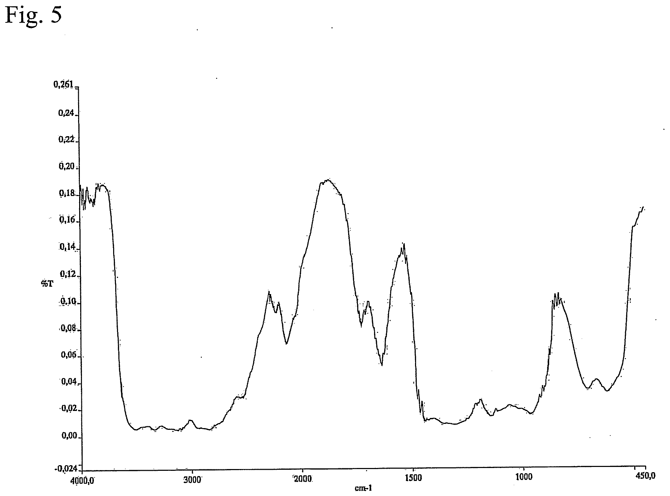

An aqueous solution of cross-linking carboxymethyl starch (1 wt-%) and citric acid catalyst (1 wt-%) was prepared. Next, filter paper (0.5 g) was added to this aqueous solution. The heterogeneous cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 5).

### Ex 1f) Organic Acid Catalyzed Heterogeneous Crosslinking of Cellulose Paper (according to the method in Example 1)

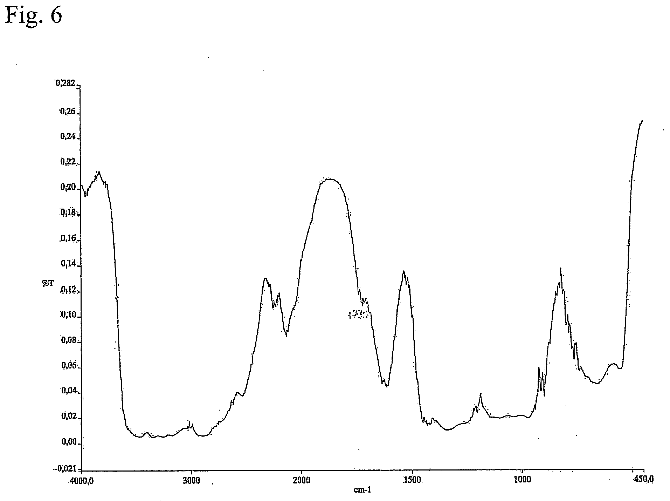

An aqueous solution of cross-linking carboxymethyl starch (5 wt-%) and citric acid catalyst (1 wt-%) was prepared. Next, heterogeneous filter paper (0.5 g) was added to this aqueous solution. The cellulose paper soaked with the solution was thereafter removed from the solution and heated (100ºC) for the time (60 min) needed to achieve esterification and crosslinking. The crosslinked filter paper was next washed with water and analyzed by FT IR, which confirmed the presence of ester bonds (Figure 6).

### Ex 1g) Organic Acid Catalyzed Heterogeneous Crosslinking of Paper (according to the method in Example 1)

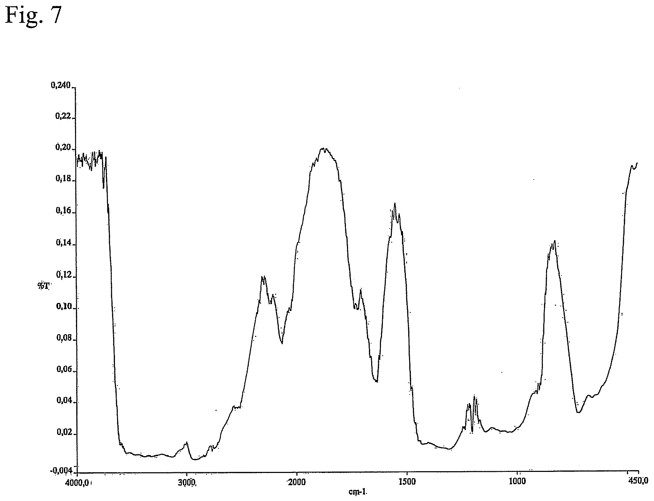

An aqueous solution of cross-linking carboxymethyl starch (5 wt-%) and citric acid catalyst (1 wt-%) was prepared. Next, heterogeneous filter paper (0.5 g) was added to this aqueous solution. The paper soaked with the solution was thereafter removed from the solution and heated (100ºC) for the time (1 min) needed to achieve esterification and crosslinking. The crosslinked filter paper was next washed with water and analyzed by FT IR, which confirmed the presence of ester bonds (Figure 7).

### Ex 1h) Organic Acid Catalyzed Heterogeneous Crosslinking of Cotton (according to the method in Example 1)

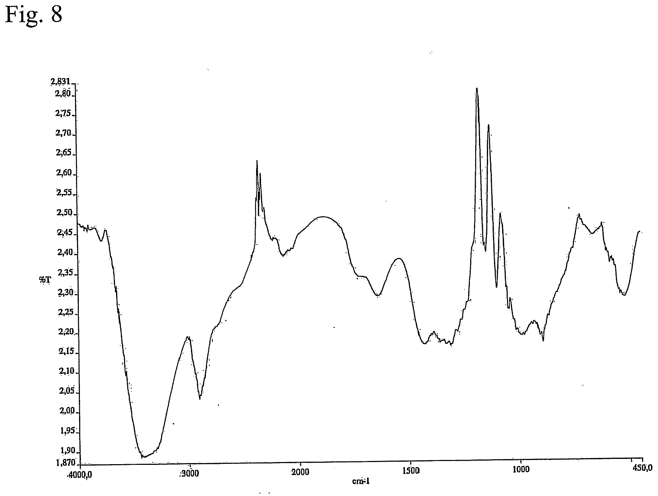

An aqueous solution of cross-linking carboxymethyl cellulose (1 wt-%) and citric acid catalyst (1 wt-%) was prepared. Next, cotton sheet (0.5 g) was added to this aqueous solution. The heterogeneous cotton sheet soaked with the solution was thereafter removed from the solution and heated (100ºC) for the time (60 min) needed to achieve esterification and crosslinking. The crosslinked cotton sheet was next washed with water and analyzed by FT IR, which confirmed the presence of ester bonds (Figure 8).

### Ex 1i) Organic Acid Catalyzed Heterogeneous Crosslinking of Cotton (according to the method in Example 1)

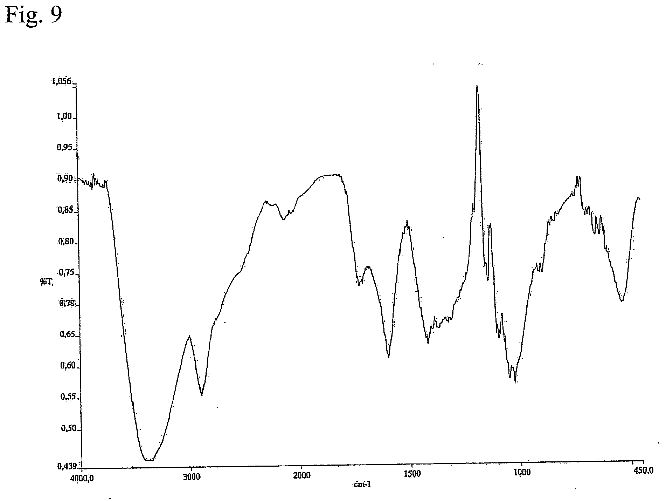

An aqueous solution of cross-linking carboxymethyl cellulose (5 wt-%) and citric acid catalyst (1 wt-%) was prepared. Next, heterogeneous cotton sheet (0.5 g) was added to this aqueous solution. The cotton sheet soaked with the solution was thereafter removed from the solution and heated (100ºC) for the time (60 min) needed to achieve esterification and crosslinking. The crosslinked cotton sheet was next washed with water and analyzed by FT IR, which confirmed the presence of ester bonds (Figure 9).

For the following Examples, no FT IR spectrums are shown.

### Ex 1l) Citric acid catalyzed Heterogeneous Crosslinking of Cellulose with pectin as cross-linking polysaccharide (according to the method in Example 1)

One liter of an aqueous solution was prepared by adding a chemical composition composed of pectin as the cross-linking polysaccharide and citric acid as the catalyst (ratio 1:10 to pectin) to a final concentration of 0.1 mol%. Next, a heterogeneous cellulosic material such as a filter paper made from heterogeneous cotton cellulose (Whatman paper), a bleached paper, an unbleached paper (lignocellulose), a cotton textile, or a piece of cotton was individually soaked in the solution, and excess of the solution was removed from the cellulosic material. The individual cellulosic materials were thereafter heated (100 ºC) for the time (30 min-3 h) needed to achieve esterification and cross-linking (see Table 3). The crosslinked cellulose was next washed with water and analyzed by FT IR, which confirmed the presence of ester bonds (Table 3). Moreover, a paper sheet made from bleached wood pulp was measured for their levels of tensile strength, stiffness, and strain with a tensile strength tester (Table 1).

| **Table 1: Mechanical properties of paper sheets derived from bleached wood pulp, and modified with various polycarboxylic acid crosslinking agents** | | | | | | | | |
|---|---|---|---|---|---|---|---|---|
| **Sample:** | **Blank** | **Citric acid** | **Maleic acid** | **Tartaric acid** | **Pectin** | **Pectin** | **Pectin** | **Pectin** |
| **Koncentration (%):** | 0,00 | 7,00 | 7,00 | 7,00 | 5,00 | 5,00 | 10,00 | 10,00 |
| **Catalyst:** | 0,00 | - | - | - | citronsyra | citronsyra | citronsyra | citronsyra |
| **Temperatur (°C):** | 100,00 | 100,00 | 100,00 | 100,00 | 100,00 | 100,00 | 100,00 | 100,00 |
| **Time (h):** | 1,00 | 0,33 | 0,33 | 0,33 | 0,50 | 1,00 | 0,50 | 1,00 |
| **Bursting strenght (kN/m):** | 0,93 | 0,96 | 1,08 | 1,01 | 1,35 | 1,49 | 1,81 | 1,49 |
| **change (%):** | 0,00 | 3,23 | 16,13 | 8,60 | 45,16 | 60,22 | 94,62 | 60,22 |
| **Tensile strenght (%):** | 1,25 | 1,29 | 1,44 | 1,49 | 1,73 | 2,08 | 2,97 | 1,84 |
| **change (%):** | 0,00 | 3,20 | 15,20 | 19,20 | 38,40 | 66,40 | 137,60 | 47,20 |
| **Work (J/m^2):** | 7,39 | 7,89 | 10,20 | 9,70 | 16,17 | 21,53 | 38,67 | 18,87 |
| **change (%):** | 0,00 | 6,77 | 38,02 | 31,26 | 118,81 | 191,34 | 423,27 | 155,35 |
| **Flexibility (kN/m):** | 130,60 | 182,00 | 170,80 | 147,50 | 197,50 | 207,60 | 247,50 | 194,70 |
| **change (%):** | 0,00 | 39,36 | 30,78 | 12,94 | 51,23 | 58,96 | 89,51 | 49,08 |

Table 3.

| **Cellulosic material** | **Temp of reaction (ºC)** | **Time of reaction (min)** |
|---|---|---|
| Filter paper | 100 | 30 |
| Unbleached paper | 100 | 60 |
| Bleached paper | 100 | 30 |
| Cotton textile | 100 | 40 |
| Pure cotton | 100 | 30 |

### Ex 1m) Citric acid catalyzed Heterogeneous Crosslinking of Cellulose with pectin as cross-linking polysaccharide. (according to the method in Example 1)

One liter of an aqueous solution was prepared by adding a chemical composition composed of pectin as the cross-linking polysaccharide and citric acid as the catalyst (ratio 1:10 to pectin) to a final concentration of 10 mol%. A heterogenous cellulosic material such as a filter paper made from cotton cellulose (Whatman paper), a bleached paper, an unbleached paper (lignocellulose), a cotton textile, or a piece of cotton was individually soaked in the solution, and excess of the solution was removed from the cellulosic material. The individual cellulosic materials were thereafter heated (50 ºC) for the time (1 h- 3 h) needed to achieve esterification and cross-linking. The crosslinked cellulose was next washed with water and analyzed by FT IR, which confirmed the presence of ester bonds.

### Ex 1n) Citric acid catalyzed Heterogeneous Crosslinking of Cellulose with pectin as cross-linking polysaccharide (according to the method in Example 1).

One liter of an aqueous solution was prepared by adding a chemical composition composed of pectin as the cross-linking polysaccharide and citric acid as the catalyst (ratio 1:10 to pectin) to a final concentration of 1 mol%. A heterogeneous cellulosic material such as a filter paper made from cotton cellulose (Whatman paper), a bleached paper, an unbleached paper (lignocellulose), a cotton textile, or a piece of cotton was individually soaked in the solution, and excess of the solution was removed from the cellulosic material. The individual cellulosic materials were thereafter heated (200 ºC) for the time (1 min- 10 min) needed to achieve esterification and cross-linking. The crosslinked cellulose was next washed with water and analyzed by FT IR, which confirmed the presence of ester bonds.

### Ex 1o) Tartaric acid catalyzed heterogeneous crosslinking of filter paper with carboxymethyl cellulose as cross-linking polysaccharide (according to the method in Example 1)

One liter of an aqueous solution was prepared by adding a chemical composition composed of carboxymethyl cellulose as the cross-linking polysaccharide and tartaric acid as the catalyst (ratio 1:10 to carboxymethyl cellulose) to a final concentration of 1 mol%. A filter paper made from cotton cellulose (Whatman paper) was soaked in the solution, and excess of the solution was removed from the cellulosic material. The filter paper was thereafter heated (100 ºC) for the time (10 min) needed to achieve esterification and cross-linking. The cross-linked filter paper was next washed with water and analyzed by FT IR, which confirmed the presence of ester bonds.

### Ex 1p) Propionic acid catalyzed heterogeneous crosslinking of filter paper with carboxymethyl starch as cross-linking polysaccharide (according to the method in Example 1)

One liter of an aqueous solution was prepared by adding a chemical composition composed of carboxymethyl cellulose as the cross-linking polysaccharide and tartaric acid as the catalyst (ratio 1:10 to carboxymethyl cellulose) to a final concentration of 1 mol%. A filter paper made from cotton cellulose (Whatman paper) was soaked in the solution, and excess of the solution was removed from the cellulosic material. The filter paper was thereafter heated (100 ºC) for the time (10 min) needed to achieve esterification and cross-linking. The cross-linked filter paper was next washed with water and analyzed by FT IR, which confirmed the presence of ester bonds.

## Claims

1. A method of crosslinking a paper based material selected from printing paper, gypsum grade paper, kraft sack paper, paperboard, liquid packaging board, corrugated board, fine paper, thin paper, and specialty paper, wherein the method comprises the steps of:
a) preparing an aqueous crosslinking solution consisting of;
- a crosslinking polysaccharide containing at least two carboxylic acid functionalities selected from pectines, carboxymethyl starch, carboxymethyl cellulose and mixtures thereof; and
- an organic acid crosslinking catalyst selected from formic acid, acetic acid, propionic acid, butanoic acid, and pentanoic acid, mandelic acid, amino acid, maleic acid, tartaric acid, citric acid and mixtures thereof in the amount of 0.1-100 weight parts, calculated on 100 weight parts of said crosslinking polysaccharide,
b) adding said aqueous crosslinking solution by coating, spraying on said paper based material or dipping said paper based material in said aqueous crosslinking solution and
c) removing the water from said paper based material by heating at a temperature ranging from 50-200°C in between 1 minute to 8 hours.

2. The method of claim 1, wherein the paper based material is made from unbleached wood pulp, bleached wood pulp, unbleached pulp or recycled pulp.

3. The method according to any of claims 1-2, wherein the polysaccharide containing at least two carboxylic acid functionalities is carboxymethyl starch.

4. The method according to any of claims 1-2, wherein the polysaccharide containing at least two carboxylic acid functionalities is carboxymethyl cellulose.

5. The method according to any of claims 1-4, wherein said organic acid is citric acid.

6. The method according to any of claims 1-4, wherein said organic acid is tartaric acid.

7. Use of an aqueous crosslinking solution to improve the strength of a paper based material selected from printing paper, gypsum grade paper, kraft sack paper, paperboard, liquid packaging board, corrugated board, fine paper, thin paper, and specialty paper wherein the crosslinking solution consisting of a crosslinking polysaccharide containing at least two carboxylic acid functionalities selected from pectines, carboxymethyl starch, carboxymethyl cellulose and mixtures thereof; and an organic acid crosslinking catalyst selected from formic acid, acetic acid, propionic acid, butanoic acid, and pentanoic acid, mandelic acid, amino acid, maleic acid, tartaric acid, citric acid and mixtures thereof in the amount of 0.1-100 weight parts, calculated on 100 weight parts of said crosslinking polysaccharide, is sprayed on said paper based material, whereafter the water is removed by heating at a temperature ranging from 50-200 C for in between 1 minute to 8 hours.

## Patentansprüche

1. Verfahren zum Vernetzen eines auf Papier basierenden Materials, ausgewählt aus Druckpapier, Gipssortenpapier, Kraftsackpapier, Karton, Getränkekarton, Wellpappe, Feinpapier, dünnem Papier und Spezialpapier, wobei das Verfahren die Schritte umfasst:
a) Zubereiten einer wässrigen Vernetzungslösung, bestehend aus;
- einem vernetzenden mindestens zwei Carbonsäure-Funktionalitäten enthaltenden Polysaccharid, ausgewählt aus Pektinen, Carboxymethylstärke, Carboxymethylzellulose und Gemischen davon; und
- einem organische Säure-Vernetzungskatalysator, ausgewählt aus Ameisensäure, Essigsäure, Propionsäure, Buttersäure und Valeriansäure, Mandelsäure, Aminosäure, Maleinsäure, Weinsäure, Zitronensäure und Gemischen davon, in der Menge von 0,1-100 Gewichtsteilen, berechnet auf 100 Gewichtsteile von dem vernetzenden Polysaccharid,
b) Zugabe der wässrigen Vernetzungslösung durch Beschichten, Sprühen auf das auf Papier basierende Material oder Tauchen des auf Papier basierenden Materials in die wässrige Vernetzungslösung und
c) Entfernen des Wassers aus dem auf Papier basierenden Material durch Erhitzen auf eine Temperatur im Bereich von 50-200°C in zwischen 1 Minute bis 8 Stunden.

2. Verfahren nach Anspruch 1, wobei das auf Papier basierende Material aus ungebleichtem Holzzellstoff, gebleichtem Holzzellstoff, ungebleichtem Zellstoff oder recyceltem Zellstoff hergestellt wird.

3. Verfahren nach einem der Ansprüche 1-2, wobei das Polysaccharid, das mindestens zwei Carbonsäure-Funktionalitäten enthält, Carboxymethylstärke ist.

4. Verfahren nach einem der Ansprüche 1-2, wobei das Polysaccharid, das mindestens zwei Carbonsäure-Funktionalitäten enthält, Carboxymethylzellulose ist.

5. Verfahren nach einem der Ansprüche 1-4, wobei die organische Säure Zitronensäure ist.

6. Verfahren nach einem der Ansprüche 1-4, wobei die organische Säure Weinsäure ist.

7. Verwendung einer wässrigen Vernetzungslösung zur Verbesserung der Festigkeit von einem auf Papier basierenden Material, ausgewählt aus Druckpapier, Gipssortenpapier, Kraftsackpapier, Karton, Getränkekarton, Wellpappe, Feinpapier, dünnem Papier und Spezialpapier, wobei die Vernetzungslösung, bestehend aus einem vernetzenden Polysaccharid, das mindestens zwei Carbonsäure-Funktionalitäten enthält, ausgewählt aus Pektinen, Carboxymethylstärke, Carboxymethylzellulose und Gemischen davon; und ein organische Säure-Vernetzungskatalysator, ausgewählt aus Ameisensäure, Essigsäure, Propionsäure, Buttersäure und Valeriansäure, Mandelsäure, Aminosäure, Maleinsäure, Weinsäure, Zitronensäure und Gemischen davon, in der Menge von 0,1-100 Gewichtsteilen, berechnet auf 100 Gewichtsteile von dem vernetzenden Polysaccharid, auf das auf Papier basierende Material gesprüht wird, wonach das Wasser durch Erhitzen auf eine Temperatur im Bereich von 50-200°C für zwischen 1 Minute bis 8 Stunden entfernt wird.

## Revendications

1. Procédé de réticulation d'un matériau à base de papier sélectionné parmi un papier d'impression, un papier de qualité plâtre, un papier kraft pour sac, un carton, un carton d'emballage de liquide, un carton ondulé, un papier fin, un papier mince et un papier spécial, le procédé comprenant les étapes de :
a) préparer une solution de réticulation aqueuse constituée :
- d'un polysaccharide de réticulation contenant au moins deux fonctionnalités acide carboxylique choisies parmi les pectines, l'amidon carboxyméthylique, la cellulose carboxyméthylique et leurs mélanges ; et
- un catalyseur de réticulation à base d'acide organique choisi parmi l'acide formique, l'acide acétique, l'acide propionique, l'acide butanoïque et l'acide pentanoïque, l'acide mandélique, un acide aminé, l'acide maléique, l'acide tartrique, l'acide citrique et leurs mélanges en une quantité de 0,1-100 parties en poids, calculée pour 100 parties en poids dudit polysaccharide de réticulation,
b) ajouter ladite solution aqueuse de réticulation par revêtement, pulvérisation sur ledit matériau à base de papier ou tremper ledit matériau à base de papier dans ladite solution aqueuse de réticulation ; et
c) éliminer l'eau dudit matériau à base de papier par chauffage à une température allant de 50-200°C entre 1 minute et 8 heures.

2. Procédé selon la revendication 1, dans lequel le matériau à base de papier est fabriqué à partir de pâte de bois non blanchie, de pâte de bois blanchie, de pâte non blanchie ou de pâte recyclée.

3. Procédé selon l'une quelconque des revendications 1 et 2, dans lequel le polysaccharide contenant au moins deux fonctionnalités acide carboxylique est l'amidon carboxyméthylique.

4. Procédé selon l'une quelconque des revendications 1 et 2, dans lequel le polysaccharide contenant au moins deux fonctionnalités acide carboxylique est la cellulose carboxyméthylique.

5. Procédé selon l'une quelconque des revendications 1 à 4, dans lequel ledit acide organique est l'acide citrique.

6. Procédé selon l'une quelconque des revendications 1 à 4, dans lequel ledit acide organique est l'acide tartrique.

7. Utilisation d'une solution de réticulation aqueuse pour améliorer la résistance d'un matériau à base de papier choisi parmi un papier d'impression, un papier de qualité plâtre, un papier kraft pour sac, un carton, un carton d'emballage de liquide, un carton ondulé, un papier fin et un papier spécial, dans laquelle la solution de réticulation consistant en un polysaccharide de réticulation contenant au moins deux fonctionnalités acide carboxylique choisies parmi les pectines, l'amidon carboxyméthylique, la cellulose carboxyméthylique et leurs mélanges ; et un catalyseur de réticulation à base d'acide organique choisi parmi l'acide formique, l'acide acétique, l'acide propionique, l'acide butanoïque et l'acide pentanoïque, l'acide mandélique, un acide aminé, l'acide maléique, l'acide tartrique, l'acide citrique et leurs mélanges en une quantité de 0,1-100 parties en poids, calculée pour 100 parties en poids dudit polysaccharide de réticulation, est pulvérisée sur ledit matériau à base de papier, et ensuite » l'eau est éliminée par chauffage à une température comprise entre 50 et 200°C pendant entre 1 minute et 8 heures.
